# EUROPÄISCHE PATENTSCHRIFT

(11) **EP 2 955 044 B1**
(45) Veröffentlichungstag und Bekanntmachung des Hinweises auf die Patenterteilung: **15.02.2017**
(21) Anmeldenummer: 14002058.7
(22) Anmeldetag: 14.06.2014
(51) Int. Cl.: B23P 19/04, B60J 10/82, B60J 10/00

(54) **Montagevorrichtung zum Befestigen einer Dichtung**
Mounting device for fastening a seal
Dispositif de montage destiné à la fixation d'un joint

(43) Veröffentlichungstag der Anmeldung: 16.12.2015
(73) Patentinhaber: EFS-Gesellschaft für Hebe- und Handhabungstechnik mbh, 74226 Nordheim (DE)
(72) Erfinder: Göller, Christoph, 74226 Nordheim (DE)
(74) Vertreter: Zurhorst, Stefan

(56) Entgegenhaltungen:
- WO-A1-91/05634
- WO-A1-2011/045494
- DE-B4-102007 033 363
- US-A1- 2007 221 323

## Beschreibung

Die Erfindung betrifft eine Montagevorrichtung der im Oberbegriff des Anspruchs 1 angegebenen Gattung.

Im Fahrzeugbau, insbesondere im Kraftfahrzeugbau werden Dichtungen eingesetzt, die als bandförmiges Endlosmaterial oder als vorkonfektionierte Dichtung abgerollt und aufgeklebt werden. Ein typischer Anwendungsfall ist die Schiebedachöffnung in einem Kraftfahrzeug. Im zugeordneten Karosserieteil, hier also dem Fahrzeugdach ist eine Fahrzeugöffnung eingearbeitet. Am Rand der Fahrzeugöffnung ist das Karosserieteil nach innen unter Bildung eines umlaufenden Flansches abgewinkelt. Für eine Abdichtung des Schiebedachs gegenüber dem genannten Karosserieteil wird ein selbstklebendes und/oder formschlüssig zu befestigendes Dichtungsband auf die Stirnfläche des genannten Flansches aufgerollt. Sinngemäß das Gleiche gilt natürlich auch für Dichtungen an anderen Fahrzeugöffnungen.

An die Verklebung der Dichtung mit der Stirnfläche des Flansches sind hohe Anforderungen gestellt. Für eine dauerhafte Verklebung und eine zuverlässige Dichtwirkung muss innerhalb enger Toleranzen eine definierte Anpresskraft beim Verkleben auf das Dichtungsmaterial aufgebracht werden, ohne dass das elastische Dichtungsmaterial übermäßig gestaucht oder gedehnt wird. Die Einhaltung der genannten Vorgaben wird durch verschiedene Umstände erschwert. Die abzudichtenden Fahrzeugöffnungen weisen häufig unregelmäßige Formen mit wechselnd geraden und gekrümmten Kanten bzw. Flanschverläufen auf. Anpresskraft und Dehnungsvermeidung müssen gleichermaßen in geraden und gekrümmten Flanschabschnitten unter Kontrolle gehalten werden. Eine exakte Höhenpositionierung der Dichtung ist unter dem Einfluss der im Regelfall räumlich gekrümmten Karosseriefläche schwierig umzusetzen.

Aus der DE 10 2007 033 363 B4 ist eine Vorrichtung zum Aufbringen einer Dichtung unter den vorgenannten Umständen bekannt. Die dort gezeigte Montagevorrichtung umfasst einen Grundträger mit zwei daran angebrachten Anpressrollen, wobei die erste, vorlaufende Anpressrolle als Applikationsrolle und die zweite, nachlaufende Anpressrolle als Andrückrolle bezeichnet sind. Die zweite Anpressrolle, namentlich die Andrückrolle, ist gegenüber dem Grundkörper mittels eines Stellantriebes oder einer Feder beweglich. Hierdurch soll eine Nachführung gegenüber dem Verlauf der Flanschfläche erzielt werden.

Problematisch ist hierbei, dass die Montagevorrichtung in ihrer Gesamtheit entlang der abzudichtenden Flanschfläche exakt geführt werden muss, um eine lagegenaue Positionierung und eine definierte Anpressung des Dichtungsbandes zu erzielen. Dies setzt den Einsatz eines kostspieligen Roboters voraus, der die Kontur der Fahrzeugöffnung einem Programm folgend abfährt. Neben dem hohen Investitionsaufwand ist eine für den jeweiligen Anwendungsfall spezifische Programmierung erforderlich. Beim Wechsel der Fahrzeugtypen bzw. Ausschnittsformen sind aufwändige Anpassungen der Steuerung erforderlich. Der Ausgleich von Form- und Lagetoleranzen ist schwierig. Insgesamt muss ein hoher Aufwand betrieben werden, die Dichtung lagegenau und mit durchgängig gleichmäßiger Anpresskraft unter Vermeidung von Dehnungen bzw. Stauchungen aufzubringen.

Der Erfindung liegt die Aufgabe zugrunde, eine gattungsgemäße Montagevorrichtung derart weiterzubilden, dass bei einfacher und kostengünstiger Konstruktion eine exakt reproduzierbare Befestigung der Dichtung sowie ein flexibler Einsatz an Fahrzeugöffnungen mit unterschiedlicher Geometrie möglich sind.

Diese Aufgabe wird durch eine Montagevorrichtung mit den Merkmalen des Anspruchs 1 gelöst.

Nach der Erfindung ist vorgesehen, dass den beiden Anpressrollen Gegenpresselemente zur Führung entlang einer der Stirnfläche abgewandten Rückseite des Flansches zugeordnet sind. Dabei ist am Grundträger mindestens ein Schwenkträger schwenkbar gelagert, wobei an dem mindestens einen Schwenkträger eine der beiden Anpressrollen drehbar gelagert ist, und wobei an dem gleichen Schwenkträger zwei zugeordnete Gegenpresselemente angeordnet sind.

Durch die genannte Anordnung wird zunächst erreicht, dass die Montagevorrichtung insgesamt selbsttätig bzw. selbstlenkend dem Verlauf des abzudichtenden Fahrzeugflansches folgt: Ein investitionsintensiver Roboter nebst aufwändiger Programmsteuerung ist für die Führung der Montagevorrichtung nicht erforderlich. Für das Aufbringen der Dichtung muss lediglich eine geeignete Vorschubbewegung erzeugt werden, die die Montagevorrichtung selbstlenkend entlang des abzudichtenden Flansches laufen lässt. Die Gegenpresselemente tragen nicht nur zum Selbstlenken bei, sondern erzeugen bei geeigneter Einstellung gegenüber der jeweils zugeordneten Anpressrolle auch eine definierte Anpresskraft. Zumindest diejenigen Gegenpresselemente, die an dem mindestens einen Schwenkträger angebracht sind, führen bei einer schwenkenden Lenkbewegung des Schwenkträgers die gleiche Schwenkbewegung aus, so dass sie unabhängig von einer Geradeaus- oder Kurvenfahrt selbst bei wechselnden Kurvenradien ihre Relativposition zur zugeordneten Anpressrolle und insbesondere auch zum zugeordneten Anpresspunkt der Dichtung am Flansch zumindest näherungsweise beibehalten. Schwankungen in der Anpresskraft als Folge unterschiedlicher Kurvenradien des Flanschverlaufes können auf ein Minimum reduziert oder sogar vollständig eliminiert werden.

Es kann ausreichen, nur einen Schwenkträger mit einer Anpressrolle und zwei Gegenpresselemente vorzusehen, wobei es sich hier gleichermaßen um die vorlaufende oder die nachlaufende Anpressrolle handeln kann. In einem solchen Fall können die verbleibende Anpressrolle sowie ein oder mehrere zugeordnete Gegenpresselemente direkt am Grundträger gelagert werden. Bevorzugt sind zwei Schwenkträger mit je einer Anpressrolle und mit je zwei zugeordneten Gegenpresselementen am Grundträger schwenkbar gelagert. Hierdurch wird neben verbesserten Selbstlenkeigenschaften insbesondere erreicht, dass die kurvenunabhängige Relativpositionierung der Gegenpresselemente zu sämtlichen Anpressrollen erhalten bleibt und damit eine zumindest näherungsweise konstante Anpresskraft unabhängig vom Radius des Flanschverlaufes an beiden Anpressrollen sichergestellt ist.

Die Gegenpresselemente können Gleitelemente beispielsweise in Form von Gleitschuhen, polierten Gleitstiften oder dergleichen sein. In vorteilhafter Weiterbildung sind mindestens ein Teil der Gegenpresselemente und insbesondere sämtliche Gegenpresselemente als Gegenpressrollen mit Drehachsen ausgebildet. Hierdurch wird für den Vorschub der Montagevorrichtung ein verringerter Leistungsbedarf erforderlich, während die Oberfläche des Karosserieteils im Bereich der Flanschrückseite geschont wird.

Für die geometrische Ausgestaltung des Schwenkträgers bzw. für die darauf vorzunehmende Positionierung der Anpressrolle und der Gegenpresselemente kommen verschiedene Ausgestaltungen in Betracht. In einer bevorzugten Ausfuhrungsform folgt die Positionierung der Anpressrolle und der zugeordneten Gegenpresselemente folgender Regel: Durch die Mittelpunkte der beiden einem gemeinsamen Schwenkträger zugeordneten Gegenpresselemente verläuft eine Verbindungsgerade. Des Weiteren ist eine Bezugsebene dadurch definiert, dass sie senkrecht zur Verbindungsgeraden liegt sowie durch die dem gleichen Schwenkträger zugeordnete Anpressrolle verläuft. Die Anpressrolle und die beiden zugeordneten Gegenpresselemente sind so auf dem gemeinsamen Schwenkträger zu positionieren, dass die genannte Bezugsebene die Verbindungsgerade in einem Punkt zwischen den beiden Gegenpresselementen schneidet. Insbesondere wird eine Positionierung derart gewählt, dass die Bezugsebene die Verbindungsgerade in der Mitte zwischen den beiden Gegenpresselementen schneidet. Hierdurch wird eine selbstpositionierende bzw. selbstlenkende 3-Punkt-Auflage des Schwenkträgers am abzudichtenden Flansch erreicht, ohne dass eine der Rollen bzw. Gegenpresselemente unbeabsichtigt abheben kann. Bei einer symmetrischen Ausgestaltung, wenn also die Bezugsebene die Verbindungsgerade in der Mitte zwischen den beiden Gegenpresselementen schneidet, ist zudem eine gleichmäßige Kraftverteilung auf die beiden Gegenpresselemente sichergestellt, die auch bei wechselnden Kurvenradien zumindest näherungsweise aufrecht erhalten bleibt. Gleichermaßen ist erreicht, dass eine federnde Auslenk- bzw. Nachführbewegung der Gegenpresselemente, sofern überhaupt erforderlich, auf ein Minimum reduziert ist.

In einer vorteilhaften Weiterbildung der Erfindung ist am Schwenkträger ein Höhenführungselement gehalten und mit dem Schwenkträger gemeinsam verschwenkbar. Das Höhenführungselement ist zur Führung der Montagevorrichtung auf einer an den Flansch anschließenden und dem Verlauf des Flansches folgenden Karosseriefläche ausgebildet bzw. vorgesehen. Das Höhenführungselement kann ebenso wie weiter oben im Zusammenhang mit den Gegenpresselementen beschrieben ein Gleitelement sein, und ist bevorzugt als Höhenrolle mit einer Drehachse ausgebildet, wobei die Höhenrolle zum Abrollen auf der Karosseriefläche vorgesehen ist. Durch die Anordnung des Höhenführungselementes auf dem Schwenkträger lenkt dieses mit, so dass bei Kurvenfahrt ein Schieflaufen bzw. ein Rutschen seitlich zur Bewegungsrichtung vermieden bzw. ausgeschlossen ist. Vorteilhaft liegt das Höhenführungselement in der vorgenannten Bezugsebene. Hierdurch wird erreicht, dass das Höhenführungselement unabhängig von der Schwenkbewegung des Schwenkträgers immer exakt oberhalb der zugeordneten Anpressrolle und außerdem exakt oberhalb der Anpressstelle der Anpressrolle liegt. Bei einem räumlich gekrümmten Verlauf der angrenzenden Karosseriefläche wird eine exakte Höhenpositionierung der Dichtung beim Aufkleben an jeder Stelle des Flansches sichergestellt, wobei weder Krümmungsradien des Flansches in der Öffnungsebene noch Wölbungsradien des Karosserieteils in einer senkrecht dazu liegenden Hochrichtung eine Rolle spielen.

Für die Erzeugung einer definierten Anpresskraft, mit der das Dichtungsmaterial gegen den Flansch gepresst und damit verklebt wird, ist zunächst eine bestimmte Relativpositionierung der Gegenpresselemente zur zugeordneten Anpressrolle erforderlich. Diese ist so einzustellen, dass der Flansch und die Dichtung unter Einwirkung der genannten Anpresskraft zwischen der Anpressrolle und den zugeordneten Gegenpresselementen hindurch laufen. Es kann ausreichen, eine feste, unnachgiebige Relativpositionierung zu wählen, wobei dann die Elastizität des Dichtungsmaterials ausgenutzt wird. In vorteilhafter Weiterbildung der Erfindung sind die Gegenpresselemente gegen die Vorspannkraft eines elastisch federnden Federelementes am Schwenkträger verschiebbar gelagert. Über die Vorspannkraft des oder der Federelemente kann die für die Verklebung erforderliche Anpresskraft exakt eingestellt werden. Außerdem erfolgt beim Wechsel zwischen Geradeauslauf und Kurvenfahrt mit unterschiedlichen Radien eine selbsttätige Abstandsanpassung.

Das Federelement kann eine Schraubenfeder oder dergleichen sein. Bevorzugt ist das Federelement durch einen Pneumatikzylinder gebildet. Bei entsprechender Auslegung des Pneumatikzylinders mit einem hinreichend großen Luftvolumen und/oder mit einer Druckregelung kann die Vorspannkraft unabhängig von einer eintretenden Auslenkbewegung zumindest näherungsweise konstant gehalten werden. Eine gleichbleibend definierte Anpresskraft und die daraus folgende exakt definierte Verklebung der Dichtung mit dem Flansch kann entlang des gesamten Flanschverlaufes unabhängig von Dicken- bzw. Lagetoleranzen und unabhängig von verschiedenen Kurvenradien aufrecht erhalten werden.

Bei der genannten Ausbildung des Federelementes als Pneumatikzylinder, aber auch unabhängig davon beim Einsatz eines separaten Pneumatikzylinders ist dieser vorteilhaft für ein aktives Bewegen des oder der Gegenpresselemente zwischen einer Betriebsposition und einer Freigabeposition ausgebildet und ansteuerbar. Vor Beginn der Verklebungsarbeiten können die Gegenpresselemente mittels des Pneumatikzylinders auf eine hinreichend große Distanz zur Anpressrolle gebracht werden, so dass die Montagevorrichtung einschließlich des Dichtungsbandes am Flansch der Fahrzeugöffnung in Position gebracht werden kann. Sobald dies geschehen ist, werden die Gegenpresselemente mittels des Pneumatikzylinders auf die zugeordnete Anpressrolle so verfahren, bis sich die gewünschte Anpresskraft einstellt. Hiervon ausgehend kann dann der Montage- bzw. Verklebevorgang der Dichtung beginnen.

Bei bestimmten Einsatzzwecken kann es ausreichen, die erfindungsgemäße Montagevorrichtung entlang des abzudichtenden Flansches für das Aufkleben der Dichtung manuell zu verschieben. Natürlich kommt auch der Einsatz eines Roboters oder anderer Mittel in Betracht, um die selbstlenkende Montagevorrichtung entlang des Flansches zu verfahren. In einer bevorzugten Ausführungsform ist mindestens eine der Anpressrollen, der Gegenpressrollen und/oder der Höhenrollen von einem Motor angetrieben. Mit einfachen Mitteln und unter Ausnutzung der erfindungsgemäßen Selbstlenkwirkung kann eine konstante, klar definierte Vorschubgeschwindigkeit eingestellt werden. Von den genannten, in Frage kommenden Rollen sind zweckmäßig eine der beiden Anpressrollen, insbesondere aber beide Anpressrollen von einem bzw. je einem Motor angetrieben. Einerseits durch die Klebewirkung des Dichtungsmaterials am Fahrzeugflansch, und andererseits durch die gute Reibkraftübertragung zwischen dem Dichtungsmaterial und der jeweiligen Anpressrolle ist ein Vorschub mit geringem bzw. vernachlässigbarem Schlupf sichergestellt. Durch die Verteilung der Antriebskraft auf beide Anpressrollen wird die Dehnung des Dichtungsbandes auf ein Minimum reduziert.

Ein Ausführungsbeispiel der Erfindung ist nachfolgend anhand der Zeichnung näher beschrieben. Es zeigen:
- Fig. 1: in einer perspektivischen Übersichtsdarstellung einige Elemente der erfindungsgemäßen Montagevorrichtung beim Aufbringen einer Dichtung auf den Flansch einer Schiebedachöffnung;
- Fig. 2: in einer schematischen Draufsicht die Anordnung nach Fig. 1 als vergrößerte Detaildarstellung mit Einzelheiten zur Ausgestaltung der Montagevorrichtung und daran angeordneten Schwenkträgern beim Aufbringen der Dichtung unter Einwirkung von zwei Anpressrollen und vier Gegenpressrollen an einem Flanschabschnitt mit geradlinigem Verlauf;
- Fig. 3: die Anordnung nach Fig. 2 beim Aufbringen der Dichtung an einem gekrümmten Flanschabschnitt mit verschwenkten Schwenkträgern;
- Fig. 4: ein einzelner Schwenkträger der Anordnung nach den Fig. 2 und 3 mit Einzelheiten zur Relativpositionierung von Anpressrolle, Gegenpressrollen und Höhenrolle; und
- Fig. 5: eine schematische Frontansicht des Schwenkträgers nach Fig. 4 mit weiteren Einzelheiten zur Relativpositionierung der genannten Rollen sowie zur Darstellung eines Pneumatikzylinders für eine Relativbeweglichkeit der Gegenpressrollen gegenüber dem Schwenkträger mit der jeweiligen Anpressrolle.

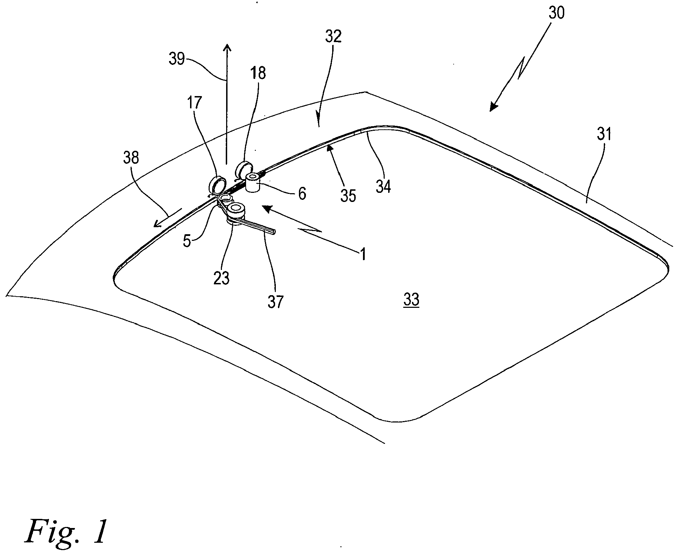

Fig. 1 zeigt in einer perspektivischen Übersichtsdarstellung ein Ausführungsbeispiel der erfindungsgemäßen Montagevorrichtung 1 beim beispielhaften Einsatz der Montage bzw. der Verklebung einer bandförmigen, elastischen Dichtung 37 mit dem Rand einer Fahrzeugschiebedachöffnung. Von einem Fahrzeug 30, hier von einem Kraftfahrzeug, ist nur der Abschnitt eines Karosserieteils 31, hier des Fahrzeugdaches dargestellt. Im Karosserieteil 31 ist eine Fahrzeugöffnung 33 ausgebildet, an deren Rand die Dichtung 37 zu montieren bzw. aufzukleben ist. Das Karosserieteil 31 weist eine äußere Karosseriefläche 32 auf, auf der senkrecht stehend eine Hochrichtung entsprechend einem Pfeil 39 definiert ist. Das Karosserieteil 31 ist am Rand der Fahrzeugöffnung 33 entgegen der Hochrichtung 39 unter Bildung eines um die Fahrzeugöffnung 33 umlaufenden Flansches 34 nach unten abgewinkelt. Am Flansch 34 ist eine nach innen zur Fahrzeugöffnung 33 hinweisende Stirnfläche 35 ausgebildet, auf die die mit einem entsprechenden Kleber versehene bandförmige Dichtung 37 vollständig umlaufend aufzukleben ist. Der Flansch 34 ist hier in einem rechten Winkel zur Karosseriefläche 32 abgewinkelt, demnach die Stirnfläche 35 des Flansches 34 parallel zur Hochrichtung 39 liegt. Es kann aber auch ein vom rechten Winkel abweichender Winkel zwischen dem Flansch 34 und der Karosseriefläche 32 vorgesehen sein. Die Stirnfläche 35 ist im Querschnitt des Flansches 34 geradlinig. Die erfindungsgemäße Montagevorrichtung 1 kann aber auch für die Anwendung an Flanschen 34 mit gekrümmtem und/oder winkligem Querschnittsverlauf eingesetzt und dafür angepasst werden.

Die Montagevorrichtung 1 wird für das Aufbringen der Dichtung 37 ausgehend von der hier gezeigten Startposition entsprechend einem Pfeil 38 entlang des Flansches 34 vollständig um die Fahrzeugöffnung 33 umlaufend bewegt. Je nach Anwendungsfall kann es aber auch zweckmäßig sein, nur einen Teil des Flansches 34 oder aber einen Flansch 34, der nur teilweise um die Fahrzeugöffnung 33 umläuft, abzufahren. Während des Verfahrweges in Richtung des Pfeils 38 wird das bandförmige Dichtungsmaterial von einer nicht gezeigten Spule bzw. Rolle abgezogen und dabei fortlaufend gegen die Stirnfläche 35 des Flansches 34 zur Bildung der Dichtung 37 angepresst. Das bandförmige Dichtungsmaterial, welches ein Endlosmaterial oder auch ein in seiner Länge vorkonfektioniertes Material sein kann, ist mit einem geeigneten Kleber versehen, so dass die Verklebung der Dichtung 37 mit der Stirnfläche 35 infolge eines einwirkenden Anpressdruckes vorgenommen wird. Alternativ oder zusätzlich zur Verklebung kommt auch eine formschlüssige Befestigung der Dichtung 37 am Flansch 34 in Betracht.

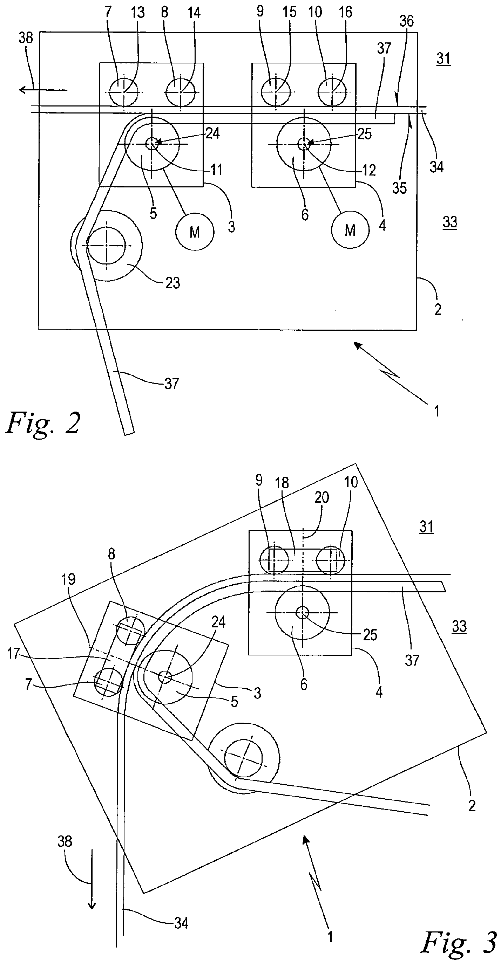

Die Montagevorrichtung 1, von der hier in Fig. 1 zur besseren Übersicht nur eine Auswahl von einigen Komponenten dargestellt ist, umfasst eine erste, in der Bewegungsrichtung 38 vorlaufende Anpressrolle 5 sowie eine zweite, in der Bewegungsrichtung 38 nachlaufende Anpressrolle 6. Darüber hinaus weist die Montagevorrichtung 1 noch eine optionale Umlenkrolle 23 auf, mittels derer die bandförmige und elastische Dichtung 37 zwischen die erste Anpressrolle 5 und die Stirnfläche 35 des Flansches 34 geführt wird. Die Umlenkrolle 23 weist eine umlaufende Nut auf, in der die Dichtung 37 geführt wird. Für den gleichen Zweck ist die erste, vorlaufende Anpressrolle 5 mit einem umlaufenden Absatz versehen. Im Übrigen sind die beiden Anpressrollen 5, 6 zylindrisch in Anpassung an die im Wesentlichen ebene Stirnfläche 35 des Flansches 34. Es können aber auch geeignete Profilierungen insbesondere der Anpressrollen 5, 6 in Anpassung an die Form des Flansches 34 und/oder der Dichtung 37 zweckmäßig sein. Der Anpressdruck, mit dem die Dichtung 37 gegen die Stirnfläche 35 gedrückt wird, wird zunächst durch die erste Anpressrolle 5 und anschließend noch einmal durch die zweite Anpressrolle 6 aufgebracht. Der erste Anpressdruck durch die erste Anpressrolle 5 kann in seinem Betrag vom zweiten Anpressdruck der zweiten Anpressrolle 6 abweichen. Einzelheiten zur Aufbringung des Anpressdruckes sind weiter unten im Zusammenhang mit den Fig. 2 bis 5 näher beschrieben.

Darüber hinaus umfasst die erfindungsgemäße Montagevorrichtung 1 noch optional mindestens ein, hier zwei Höhenführungselemente, die zur Führung der Montagevorrichtung 1 auf der sich an den Flansch 34 anschließenden und dem Verlauf des Flansches 34 folgenden Karosseriefläche 32 vorgesehen sind. Im gezeigten bevorzugten Ausführungsbeispiel sind die beiden Höhenführungselemente jeweils als Höhenrolle 17, 18 ausgebildet, wobei je eine Höhenrolle 17, 18 je einer Anpressrolle 5, 6 zugeordnet ist. Die Höhenfiihrungselemente bzw. die Höhenrollen 17, 18 geben die Höhenpositionierung der Anpressrollen 5, 6 in der weiter oben schon definierten, am jeweiligen Wirkungsort der Anpressrollen 5, 6 senkrecht zur Karosseriefläche 32 stehenden Hochrichtung 39 vor. Da die zugeführte, bandförmige Dichtung 37 mittels der ersten, vorlaufenden Anpressrolle 5 auf die Stirnfläche 35 des Flansches 34 positioniert und aufgebracht wird, erfolgt gleichermaßen auch eine Höhenpositionierung der Dichtung 37 relativ zum Karosserieteil 31 bzw. relativ zur Karosseriefläche 32.

Weitere Einzelheiten zur Ausgestaltung der erfindungsgemäßen Montagevorrichtung 1 sowie zu dem damit ausgeführten erfindungsgemäßen Montageverfahren sind schematisch in den Fig. 2 bis 5 dargestellt. Fig. 2 zeigt in einer schematischen Draufsicht, also in einer Blickrichtung entgegen der oben definierten Hochrichtung 39, die erfindungsgemäße Montagevorrichtung 1 als schematische Zusammenstellung ihrer erfindungswesentlichen Komponenten, Baugruppen und Bauteile. Demnach umfasst die Montagevorrichtung 1 einen Grundträger 2 mit den beiden oben schon erwähnten Anpressrollen 5, 6 sowie der ebenfalls oben schon erwähnten Umlenkrolle 23. Die in Fig. 1 gezeigten Höhenrollen 17, 18 sind zur besseren Übersicht in Fig. 2 nicht dargestellt. Die beiden Anpressrollen 5, 6 sind um je eine Drehachse 11, 12 drehbar gelagert, wobei die beiden Drehachsen 11, 12 in der genannten Hochrichtung 39 verlaufen und folglich parallel zueinander liegen. Darüber hinaus sind den beiden Anpressrollen 5, 6 Gegenpresselemente zur Führung entlang einer der Stirnfläche 35 abgewandten Rückseite 36 des Flansches 34 zugeordnet.

Am Grundträger sind mindestens ein Schwenkträger 3, 4, hier zwei Schwenkträger 3, 4, schwenkbar gelagert. Die zugehörigen Schwenkachsen 24, 25 liegen im gezeigten Ausführungsbeispiel koaxial zu den Drehachsen 11, 12 der beiden Anpressrollen 5, 6. Es kann aber auch eine abweichende Lage der Schwenkachsen 24, 25 vorgesehen sein. In jedem Falle liegen auch die Schwenkachsen 24, 25 in der oben genannten Hochrichtung 39 und damit parallel sowohl zueinander als auch zu den Drehachsen 11, 12 der Anpressrollen 5, 6. An dem mindestens einen, hier an beiden Schwenkträgern 3, 4, ist je eine der Anpressrollen 5, 6 drehbar gelagert. Außerdem sind an den Schwenkträgern 3, 4 je zwei zugeordnete Gegenpresselemente angeordnet. Die Gegenpresselemente sind im gezeigten Ausführungsbeispiel als Gegenpressrollen 7, 8, 9, 10 mit zugehörigen Drehachsen 13, 14, 15, 16 ausgeführt, wobei auch die Drehachsen 13, 14, 15, 16 in der Hochrichtung 39 und damit parallel zu den übrigen Achsen liegen. Die vorgenannte Parallelität der verschiedenen Drehachsen 11, 12, 13, 14, 15, 16 und der Schwenkachsen 24, 25 bedeutet nicht notwendig eine exakte geometrische Parallelität. Es kann auch ein bestimmter Winkelversatz zweckmäßig sein, solange die genannten Achsen zumindest vorrangig in der Hochrichtung 39 verlaufen.

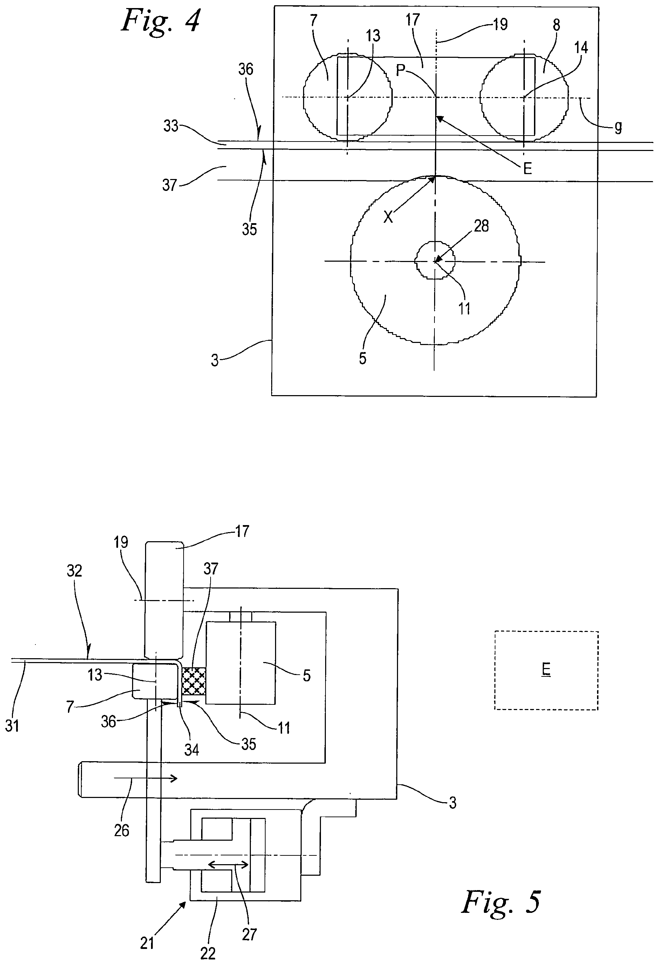

Insgesamt folgt aus den vorstehenden Ausführungen sowie aus Fig. 4 und der unten folgenden zugehörigen Beschreibung, dass jeder Schwenkträger 3, 4 mit der jeweils einen zugeordneten Anpressrolle 5, 6, mit jeweils zwei zugeordneten Gegenpressrollen 7, 8, 9, 10 sowie mit jeweils einer Höhenrolle 17, 18 eine Einheit bildet, die in ihrer Gesamtheit relativ zum Grundträger 2 um die jeweilige Schwenkachse 24, 25 verschwenkbar ist.

Bevor nun auf weitere Einzelheiten der Darstellung nach Fig. 2 eingegangen wird, wird zunächst auf Fig. 4 Bezug genommen, in der ein einzelner Schwenkträger 3 mit der darauf gelagerten Anpressrolle 5 und den ebenfalls darauf gelagerten zugeordneten Gegenpressrollen 7, 8 vergrößert dargestellt ist. In Fig. 4 ist zusammen mit Fig. 5 erkennbar, dass zusätzlich auch die zugeordnete Höhenrolle 17 auf dem Schwenkträger 3 um eine Drehachse 19 drehbar gelagert ist. Weiter ist erkennbar, dass der Schwenkträger 3 derart an den Flansch 34 angesetzt ist, dass der Flansch 34 sowie die darauf aufgedrückte Dichtung 37 zwischen einerseits der Anpressrolle 5 und andererseits dem Paar von Gegenpressrollen 7, 8 verläuft. Die Anpressrolle 5 übt senkrecht zur Stirnfläche 35 in einem Anpresspunkt X eine Anpresskraft auf die Dichtung 37 aus, mit der die Dichtung 37 gegen die Stirnfläche 35 gedrückt wird. Zur Aufrechterhaltung des Kräftegleichgewichtes wird die der Anpresskraft entgegenwirkende Gegenkraft durch die beiden zugeordneten Gegenpressrollen 7, 8 aufgenommen, welche gegenüberliegend zur Stirnfläche 35 an der Rückseite 36 des Flansches 34 anliegen.

Der Darstellung nach Fig. 4 ist noch entnehmbar, dass durch die Mittelpunkte der beiden dem gleichen Schwenkträger 3 zugeordneten Gegenpresselemente, hier also durch die Drehachsen 13, 14 der Gegenpressrollen 7, 8 eine Verbindungsgerade g verläuft. Weiter ist eine Bezugsebene E dadurch definiert, dass sie einerseits senkrecht zur Verbindungsgeraden g liegt, und dass sie andererseits durch die dem gleichen Schwenkträger 3 zugeordnete Anpressrolle 5 verläuft. Im gezeigten Ausführungsbeispiel ist die gesamte Anordnung des Schwenkträgers 3 spiegelsymmetrisch zur Bezugsebene E ausgeführt, demnach die Bezugsebene E die Verbindungsgerade g in einem Punkt P schneidet, welcher auf der Verbindungsgerade g in der Mitte zwischen den beiden Gegenpresselementen, also zwischen den Drehachsen 13, 14 der Gegenpressrollen 7, 8 liegt. Es kann aber auch eine unsymmetrische Ausgestaltung zweckmäßig sein, bei der die Bezugsebene E und damit die darin liegende Drehachse 11 der Anpressrolle 5 näher zur einen Gegenpressrolle 7 oder zur anderen Gegenpressrolle 8 verschoben ist. In jedem Falle ist es aber wichtig, dass der Punkt P auf der Verbindungsgeraden g zwischen den beiden Gegenpresselementen und nicht außerhalb davon liegt. Das vorstehend Gesagte gilt sinngemäß auch für das Höhenführungselement, hier die Höhenrolle 17 bzw. deren Drehachse 19, wobei letztere bevorzugt ebenfalls innerhalb der Bezugsebene E verläuft und dabei horizontal liegt. Aber auch hier kann ein geringer seitlicher Versatz der Höhenrolle 17 bzw. ihrer Drehachse 19 in Richtung einer der beiden Gegenpressrollen 7, 8 toleriert werden.

Weitere Einzelheiten der Anordnung nach Fig. 4 ergeben sich aus der schematischen Stirnansicht nach Fig. 5, in der der Schwenkträger 3 in einer Ansicht senkrecht zur Bezugsebene E dargestellt ist. Aus der Zusammenschau der Fig. 4 und 5 ist deutlich erkennbar, wie einerseits der Flansch 34 und die daran anliegende Dichtung 37 zwischen der Anpressrolle 5 und den zugeordneten Gegenpressrollen 7, 8 verläuft, während die Höhenrolle 17 mit ihrer horizontal in der Bezugsebene E liegenden Drehachse 19 in unmittelbarer Nähe zum Flansch 34 auf der Karosseriefläche 32 abrollt. Da die Höhenrolle 17 direkt am Schwenkträger 3 drehbar gelagert ist, wird der Schwenkträger 3 einschließlich der damit aufgebrachten Dichtung 37 in einer vorbestimmten relativen Höhenposition zur Karosseriefläche 32 bzw. zum Flansch 34 gehalten und über den gesamten Verfahrweg in eben dieser Höhenposition geführt.

Der Darstellung nach Fig. 5 ist noch entnehmbar, dass zumindest einige Gegenpresselemente, hier sämtliche Gegenpresselemente am Beispiel der Gegenpressrolle 7 gegen die Vorspannkraft eines elastisch federnden Federelementes 21 am Schwenkträger 3 verschiebbar gelagert sind. Die Vorspannkraft des Federelementes 21 drückt die Gegenpressrolle 7 sowie die übrigen Gegenpresselemente entsprechend einem Pfeil 26 in Richtung zur zugeordneten Anpressrolle 5, so dass zwischen beiden eine entsprechende Anpresskraft wirkt, und die ihrerseits die Dichtung 37 mit der entsprechenden Anpresskraft auf die Stirnfläche 35 des Flansches 34 aufklebt. Das Federelement 21 ist im gezeigten bevorzugten Ausführungsbeispiel als Pneumatikzylinder 22 ausgebildet, dessen am Kolben wirkende pneumatisch eingestellte Druckdifferenz über den gesamten Hubweg zumindest näherungsweise konstant ist und damit eine vom Auslenkungsweg nahezu unabhängige Vorspannkraft in Richtung des Pfeils 26 erzeugt. Es kann zweckmäßig sein, für ein Paar von Gegenpresselementen je ein Federelement 21 vorzusehen. Im gezeigten Ausführungsbeispiel sind sämtliche Gegenpresselemente unabhängig voneinander mittels je eines Federelementes 21 elastisch nachgiebig am zugeordneten Schwenkträger 3 geführt.

In Doppelfunktion ist der Pneumatikzylinder 22 nicht nur zur Bildung des Federelementes 21 vorgesehen. Vielmehr bildet er gleichzeitig auch ein Mittel, mit dem die Gegenpresselemente entsprechend einem Doppelpfeil 27 im Sinne eines beidseitig bzw. wechselseitig mit Druck beaufschlagbaren Betätigungszylinders zwischen einer Schließposition und einer Freigabeposition hin und her verfahrbar sind. In der gezeigten Betriebsposition liegen die Anpresselemente an der Rückseite 36 des Flansches 34 an. Zur Einnahme der nicht gezeigten Freigabeposition lassen sich die Gegenpresselemente mittels des Pneumatikzylinders 22 entgegen dem Pfeil 26 von der Anpressrolle 5 so weit entfernen, dass der Schwenkträger 3 unter Zwischenlage der Dichtung 37 an den Flansch 34 angesetzt werden kann.

Das vorstehend zum Beispiel des ersten Schwenkträger 3 Gesagte gilt analog auch für den zweiten Schwenkträger 4 mit der zugehörigen zweiten Anpressrolle 6, den beiden zugehörigen Gegenpressrollen 9, 10 sowie der zugehörigen Höhenrolle 18.

Nachfolgend wird nun erneut auf Fig. 2 sowie zusätzlich auf die Darstellung nach Fig. 3 Bezug genommen. In Fig. 2 ist die Montagevorrichtung 1 in einem Zustand dargestellt, in dem sie die Dichtung 37 auf einen geradlinig verlaufenden Abschnitt des Flansches 34 aufbringt. Im Unterschied dazu zeigt Fig. 3 die gleiche Montagevorrichtung 1 beim Aufbringen der Dichtung 37 auf einen gekrümmten Abschnitt des Flansches 34. Aus der Zusammenschau beider Darstellungen ist erkennbar, dass die relative Lage der Montagevorrichtung 1 zum Flansch 34 einerseits durch die Anpressrollen 5, 6 und andererseits durch die Gegenpressrollen 7, 8, 9, 10 fest vorgegeben ist. Außerdem ist erkennbar, dass die gegenüber dem Grundträger 2 frei verschwenkbaren Schwenkträger 3, 4 jeweils eine bestimmte Schwenkposition einnehmen, die durch jeweils drei Auflagepunkte definiert ist, nämlich jeweils durch den zugehörigen Anpresspunkt X der Anpressrollen 5, 6 an der Dichtung 37 sowie jeweils durch die beiden zugeordneten Kontaktpunkte der Gegenpressrollen 7, 8 bzw. der Gegenpressrollen 9, 10 an der gegenüberliegenden Rückseite 36 des Flansches 34.

Wenn nun die Montagevorrichtung 1 entsprechend dem Pfeil 34 von einem geradlinigen Flanschabschnitt nach Fig. 2 zu einem gekrümmten Flanschabschnitt nach Fig. 3 verfahren wird, verschwenken sich die Schwenkträger 3, 4 selbsttätig gegenüber dem Grundträger 2 derart, dass die Bezugsebene E (Fig. 4) senkrecht zur Stirnfläche 35 liegt. Damit behalten die Gegenpressrollen 7, 8, 9, 10 nicht nur ihre Relativposition zur jeweiligen Anpressrolle 5, 6, sondern auch ihre Relativposition zum Anpresspunkt X (Fig. 4) am Flansch 34, so dass unabhängig von einem geradlinigen oder gekrümmten Verlauf des Flansches 34 allenfalls geringfügige Ausgleichbewegungen mittels des Federelementes 21 (Fig. 5) erforderlich sind. In der Folge bleibt die Anpresskraft nahezu konstant. Die selbstlenkende Schwenkbewegung der Schwenkträger 3, 4 einschließlich der darauf gelagerten Höhenrollen 17, 18 führt auch dazu, dass die Drehachsen 19, 20 der Höhenrollen 17, 18 ebenfalls immer senkrecht zur Stirnfläche 35 des Flansches 34 liegen. Damit können die Höhenrollen 17, 18 ohne seitliche Rutschbewegungen auf der Karosseriefläche 32 abrollen. Schließlich ist gleichermaßen sichergestellt, dass die Höhenrollen 17 immer in der Bezugsebene E oberhalb des Anpresspunktes X (Fig. 4) der jeweiligen Anpressrolle 5, 6 positioniert sind. Damit sind Höhenfehler der Anpressrollen 5, 6 sowie der damit aufgebrachten Dichtung 37 vermieden.

Insgesamt folgt noch aus der Zusammenschau der Fig. 2, 3, dass nicht nur die beiden Schwenkträger 3, 4 selbstlenkend der Kontur des Flansches 34 folgen können, sondern dass dies gleichermaßen auch für die Montagevorrichtung 1 insgesamt einschließlich ihres Grundträgers 2 gilt. Mit Ausnahme einer Vorschubbewegung in Richtung des Pfeils 38 müssen keinerlei Positioniermaßnahmen getroffen werden. Es kann lediglich zweckmäßig sein, die Montagevorrichtung 1 zur Gewichtskraftentlastung an einer Hebevorrichtung aufzuhängen, welche ansonsten eine freie Beweglichkeit der Montagevorrichtung 1 zulässt. Für einen Vorschub der Montagevorrichtung 1 ist im gezeigten Ausführungsbeispiel mindestens ein Motor M vorgesehen, der auf mindestens eine der Anpressrollen 5, 6, der Gegenpressrollen 7, 8, 9, 10 und/oder der Höhenrollen 17, 18 antreibend wirkt. In der gezeigten Ausführungsform sind die beiden Anpressrollen 5, 6 jeweils durch je einen eigenen Motor M angetrieben, während die übrigen Rollen frei mitlaufen. Es kann aber auch zweckmäßig sein, nur einen Motor M vorzusehen, der auf beide Anpressrollen 11, 12 einwirkt. Ebenso kann es zweckmäßig sein, nur eine der beiden Anpressrollen 11, 12 oder der übrigen Rollen motorisch anzutreiben. Die Motoren M sind im gezeigten Ausführungsbeispiel elektrische Motoren. Es können aber auch pneumatische oder hydraulische Motoren zum Einsatz kommen.

## Patentansprüche

1. Montagevorrichtung (1) zum Befestigen einer Dichtung (37) an eine Stirnfläche (35) eines Flansches (34) einer Fahrzeugöffnung (33), umfassend einen Grundträger (2), wobei mit dem Grundträger (2) eine erste Anpressrolle (5) mit einer Drehachse (11) sowie eine zweite Anpressrolle (6) mit einer Drehachse (12) verbunden sind, und wobei die Anpressrollen (5, 6) zum Anpressen der Dichtung (37) auf die Stirnfläche (35) vorgesehen sind,
**dadurch gekennzeichnet, dass** den beiden Anpressrollen (5, 6) Gegenpresselemente zur Führung entlang einer der Stirnfläche (35) abgewandten Rückseite (36) des Flansches (34) zugeordnet sind, dass am Grundträger (2) mindestens ein Schwenkträger (3, 4) schwenkbar gelagert ist, und dass an dem mindestens einen Schwenkträger (3, 4) eine der Anpressrollen (5, 6) drehbar gelagert ist sowie zwei zugeordnete Gegenpresselemente angeordnet sind.

2. Montagevorrichtung nach Anspruch 1,
**dadurch gekennzeichnet, dass** zwei Schwenkträger (3, 4) mit je einer Anpressrolle (5, 6) und je zwei zugeordneten Gegenpresselementen am Grundträger (2) schwenkbar gelagert sind.

3. Montagevorrichtung nach Anspruch 1 oder 2,
**dadurch gekennzeichnet, dass** mindestens ein Teil der Gegenpresselemente und insbesondere sämtliche Gegenpresselemente als Gegenpressrollen (7, 8, 9, 10) mit Drehachsen (13, 14, 15, 16) ausgebildet sind.

4. Montagevorrichtung nach einem der Ansprüche 1 bis 3,
**dadurch gekennzeichnet, dass** durch die Mittelpunkte der beiden einem gemeinsamen Schwenkträger (3, 4) zugeordneten Gegenpresselemente eine Verbindungsgerade (g) verläuft, dass eine Bezugsebene (E) dadurch definiert ist, dass sie senkrecht zur Verbindungsgeraden (g) liegt sowie durch die dem gleichen Schwenkträger (3, 4) zugeordnete Anpressrolle (5, 6) verläuft, und dass die Bezugsebene (E) die Verbindungsgerade (g) zwischen den beiden Gegenpresselementen, insbesondere in der Mitte zwischen den beiden Gegenpresselementen schneidet.

5. Montagevorrichtung nach einem der Ansprüche 1 bis 4,
**dadurch gekennzeichnet, dass** am Schwenkträger (3, 4) ein Höhenführungselement gehalten und mit dem Schwenkträger (3, 4) gemeinsam verschwenkbar ist, wobei das Höhenführungselement zur Führung der Montagevorrichtung (1) auf einer an den Flansch (34) anschließenden und dem Verlauf des Flansches (34) folgenden Karosseriefläche (32) vorgesehen ist.

6. Montagevorrichtung nach Anspruch 5,
**dadurch gekennzeichnet, dass** das Höhenführungselement in der Bezugsebene (E) liegt.

7. Montagevorrichtung nach Anspruch 5 oder 6,
**dadurch gekennzeichnet, dass** das Höhenführungselement als Höhenrolle (17, 18) mit einer Drehachse (19, 20) ausgebildet und am Schwenkträger (3, 4) gelagert ist, wobei die Höhenrolle (17, 18) zum Abrollen auf der Karosseriefläche (32) vorgesehen ist.

8. Montagevorrichtung nach einem der Ansprüche 1 bis 7,
**dadurch gekennzeichnet, dass** die Gegenpresselemente gegen die Vorspannkraft eines elastisch federnden Federelementes (21) am Schwenkträger (3, 4) verschiebbar gelagert sind.

9. Montagevorrichtung nach Anspruch 8,
**dadurch gekennzeichnet, dass** das Federelement (21) durch einen Pneumatikzylinder (22) gebildet ist.

10. Montagevorrichtung nach Anspruch 9,
**dadurch gekennzeichnet, dass** der Pneumatikzylinder (22) für ein aktives Bewegen des Gegenpresselementes zwischen einer Betriebsposition und einer Freigabeposition ausgebildet und ansteuerbar ist

11. Montagevorrichtung nach einem der Ansprüche 1 bis 10,
**dadurch gekennzeichnet, dass** mindestens eine der Anpressrollen (5, 6), der Gegenpressrollen (7, 8, 9, 10) und/oder der Höhenrollen (17, 18) von einem Motor (M) angetrieben ist.

12. Montagevorrichtung nach Anspruch 11,
**dadurch gekennzeichnet, dass** beide Anpressrollen (5, 6) von einem Motor (M) angetrieben sind.

## Claims

1. Mounting device (1) for fastening a seal (37) to an end face (35) of a flange (34) of a vehicle opening (33), the device comprising a base support (2), wherein a first pressure roller (5) with an axis of rotation (11) and a second pressure roller (6) with an axis of rotation (12) are connected to the base support (2) and wherein the pressure rollers (5, 6) are provided for pressing the seal (37) onto the end face (35),
**characterised in that** counterpressure elements for guidance along a rear side (36) of the flange (34) remote from the end face (35) are assigned to the two pressure rollers (5, 6), **in that** at least one swivel support (3, 4) is pivotably mounted on the base support (2), and **in that** on the at least one swivel support (3, 4) one of the pressure rollers (5, 6) is mounted rotatably and two associated counterpressure elements are arranged.

2. Mounting device according to claim 1,
**characterised in that** two swivel supports (3, 4) with a pressure roller (5, 6) and two associated counterpressure elements each are pivotably mounted on the base support (2).

3. Mounting device according to claim 1 or 2,
**characterised in that** at least a part of the counterpressure elements and in particular all of the counterpressure elements is/are designed as counterpressure rollers (7, 8, 9, 10) with axes of rotation (13, 14, 15, 16).

4. Mounting device according to any of claims 1 to 3,
**characterised in that** a connecting straight line (g) runs through the centres of the two counterpressure elements assigned to a common swivel support (3, 4), **in that** a reference plane (E) is defined thereby, **in that** it is perpendicular to the connecting straight line (g) and runs through the pressure roller (5, 6) assigned to the same swivel support (3, 4), and **in that** the reference plane (E) intersects the connecting straight line (g) between the two counterpressure elements, in particular in the middle between the two counterpressure elements.

5. Mounting device according to any of claims 1 to 4,
**characterised in that** a vertical guide element is held on the swivel support (3, 4) and pivotable together with the swivel support (3, 4), the vertical guide element being provided for guiding the mounting device (1) on a body surface (32) which adjoins the flange (34) and follows the curve of the flange (34).

6. Mounting device according to claim 5,
**characterised in that** the vertical guide element lies in the reference plane (E).

7. Mounting device according to claim 5 or 6,
**characterised in that** the vertical guide element is designed as a vertical roller (17, 18) with an axis of rotation (19, 20) and is mounted on the swivel support (3, 4), the vertical roller (17, 18) being provided for rolling on the body surface (32).

8. Mounting device according to any of claims 1 to 7,
**characterised in that** the counterpressure elements are displaceably mounted on the swivel support (3, 4) against the preloading force of an elastically resilient spring element (21).

9. Mounting device according to claim 8,
**characterised in that** the spring element (21) is represented by a pneumatic cylinder (22).

10. Mounting device according to claim 9,
**characterised in that** the pneumatic cylinder (22) is designed and selectable for actively moving the counterpressure element between an operating position and a release position.

11. Mounting device according to any of claims 1 to 10,
**characterised in that** at least one of the pressure rollers (5, 6) of the counterpressure rollers (7, 8, 9, 10) and/or of the vertical rollers (17, 18) is driven by a motor (M).

12. Mounting device according to claim 11,
**characterised in that** both pressure rollers (5, 6) are driven by a motor (M).

## Revendications

1. Dispositif de montage (1) pour fixer un joint d'étanchéité (37) à une surface frontale (35) d'un rebord (34) d'une ouverture de véhicule (33), comprenant un support de base (2), un premier galet presseur (5) avec un axe de rotation (11) et un second galet presseur (6) avec un axe de rotation (12) étant reliés au support de base (2), et les galets presseurs (5, 6) étant destinés à presser le joint d'étanchéité (37) sur la surface frontale (35),
**caractérisé en ce que** des éléments presseurs opposés sont associés aux deux galets presseurs (5, 6), pour un guidage le long d'un côté arrière (36), opposé à la surface frontale (35), du rebord (34), **en ce qu'**au moins un support pivotant (3, 4) est monté pivotant sur le support de base (2), et **en ce que** sur le ou les supports pivotants (3, 4), l'un des galets presseurs (5, 6) est monté en rotation et deux éléments presseurs associés sont disposés.

2. Dispositif de montage selon la revendication 1,
**caractérisé en ce que** deux supports pivotants (3, 4) avec un galet presseur respectif (5, 6) et deux éléments presseurs opposés respectifs sont montés pivotants sur le support de base (2).

3. Dispositif de montage selon la revendication 1 ou 2,
**caractérisé en ce qu'**une partie au moins des éléments presseurs opposés et en particulier tous les éléments presseurs opposés sont conçus comme des galets presseurs opposés (7, 8, 9, 10) avec des axes de rotation (13, 14, 15, 16).

4. Dispositif de montage selon l'une des revendications 1 à 3,
**caractérisé en ce qu'**une droite de liaison (g) traverse le centre des deux éléments presseurs opposés qui sont associés à un support pivotant (3, 4) commun, **en ce qu'**un plan de référence (E) est défini en étant perpendiculaire à la droite de liaison (g), et traverse le galet presseur (5, 6) associé au même support pivotant (3, 4), et **en ce que** le plan de référence (E) coupe la droite de liaison (g) entre les deux éléments presseurs opposés, en particulier à midistance entre les deux éléments presseurs opposés.

5. Dispositif de montage selon l'une des revendications 1 à 4,
**caractérisé en ce qu'**un élément de guidage en hauteur est fixé au support pivotant (3, 4) et est apte à pivoter conjointement avec ledit support pivotant (3, 4), l'élément de guidage en hauteur étant destiné à guider le dispositif de montage (1) sur une surface de carrosserie (32) qui fait suite au rebord (34) et qui suit le tracé du rebord (34).

6. Dispositif de montage selon la revendication 5,
**caractérisé en ce que** l'élément de guidage en hauteur est situé dans le plan de référence (E).

7. Dispositif de montage selon la revendication 5 ou 6,
**caractérisé en ce que** l'élément de guidage en hauteur est conçu comme un galet en hauteur (17, 18) avec un axe de rotation (19, 20), et est monté sur le support pivotant (3, 4), le galet en hauteur (17, 18) étant destiné à rouler sur la surface de carrosserie (32).

8. Dispositif de montage selon l'une des revendications 1 à 7,
**caractérisé en ce que** les éléments presseurs opposés sont montés coulissants sur le support pivotant (3, 4), à l'encontre de la force de contrainte d'un élément à ressort (21) qui fait ressort élastiquement.

9. Dispositif de montage selon la revendication 8,
**caractérisé en ce que** l'élément à ressort (21) est formé par un vérin pneumatique (22).

10. Dispositif de montage selon la revendication 9,
**caractérisé en ce que** le vérin pneumatique (22) est conçu et apte à être commandé pour un déplacement actif de l'élément presseur opposé entre une position de fonctionnement et une position de déblocage.

11. Dispositif de montage selon l'une des revendications 1 à 10,
**caractérisé en ce que** l'un au moins des galets presseurs (5, 6), des galets presseurs opposés (7, 8, 9, 10) et/ou des galets en hauteur (17, 18) est entraîné par un moteur (M).

12. Dispositif de montage selon la revendication 11,
**caractérisé en ce que** les deux galets presseurs (5, 6) sont entraînés par un moteur (M).
